# EUROPÄISCHE PATENTSCHRIFT

(11) **EP 2 300 709 B1**
(45) Veröffentlichungstag und Bekanntmachung des Hinweises auf die Patenterteilung: **02.12.2015**
(21) Anmeldenummer: 08749275.7
(22) Anmeldetag: 30.04.2008
(51) Int. Cl.: F03D 1/00, F03D 11/00

(54) **VERKLEIDUNG EINER GONDEL EINER WINDENERGIEANLAGE**
PANELING OF A NACELLE OF A WIND ENERGY INSTALLATION
HABILLAGE DE LA NACELLE D'UNE ÉOLIENNE

(43) Veröffentlichungstag der Anmeldung: 30.03.2011
(73) Patentinhaber: Multibrid GmbH, 27572 Bremerhaven (DE)
(72) Erfinder: DE BUHR, Ingo, 26789 Leer (DE); LEHNHOFF, Martin, 24678 RENDSBURG (DE)
(74) Vertreter: Rothkopf, Ferdinand
(86) Internationale Anmeldenummer: PCT/EP2008/003528
(87) Internationale Veröffentlichungsnummer: WO 2009/132671

(56) Entgegenhaltungen:
- EP-A- 1 101 934
- EP-A- 1 677 000
- EP-A- 1 677 001
- WO-A-82/04466
- WO-A-92/06295
- WO-A-2004/003381

## Beschreibung

### Hintergrund der Erfindung

Die Erfindung betrifft die Verkleidung einer Gondel einer Windenergieanlage sowie eine Windenergieanlage mit einer derartigen Verkleidung.

Bei modernen Windenergieanlagen ist auf einem zugehörigen Turm eine Gondel drehbar angeordnet, an der ein Rotor der Windenergieanlage gelagert ist. Der Rotor ist dabei momentenübertragend mit einem Triebstrang, mindestens jedoch einem Generator oder einem anderen Energiewandler gekoppelt, der im Wesentlichen innerhalb einer Verkleidung der Gondel angeordnet ist. Zu dem Energiewandler gehören in der Regel noch Steuereinrichtungen, die ebenfalls innerhalb der Verkleidung der Gondel angeordnet sind.

Da derartige Gondeln auf dem zugehörigen Turm in großer Höhe anzuordnen sind, müssen auch die in der Verkleidung befindlichen Bauteile dort oben angeordnet und gewartet werden. Diese Montage- und Wartungsarbeiten auf kostengünstige und zugleich sichere Weise zu erledigen, stellt eine große Herausforderung dar.

Aus EP 1 677 000 A2 ist eine Windturbinenanlage mit einer Gondel bekannt, deren komplettes Dach mithilfe von mehreren Führungsschieneneinheiten zu verschieben und damit zu öffnen ist. Dabei ist das Dach entlang einer fixierten Schiene zu verschieben und anschließend um 90° zu drehen, womit die Windturbinenanlage komplett freigelegt werden kann.

### Zugrundeliegende Aufgabe

Der Erfindung liegt die Aufgabe zugrunde, eine Windenergieanlage zu schaffen, bei der Bauelemente, die innerhalb einer Verkleidung einer zugehörigen Gondel anzuordnen sind, in besonders kostengünstiger und zugleich für die beteiligten Personen sicherer Art und Weise montiert und auch über die Lebensdauer der Windenergieanlage hinweg gewartet werden können.

Die Aufgabe ist erfindungsgemäß mit einer Verkleidung einer Gondel einer Windenergieanlage gemäß Anspruch 1 und einer Windenergieanlage gemäß Anspruch 11 gelöst. Vorteilhafte Weiterbildungen der Erfindung sind in den abhängigen Ansprüchen beschrieben.

Erfindungsgemäß ist eine Verkleidung einer Gondel einer Windenergieanlage geschaffen, bei der in der Einbaulage der Gondel eine nach oben gewandte Verkleidungsdeckenfläche ausgebildet ist. In der Verkleidungsdeckenfläche ist eine Lukenöffnung ausgebildet, die derart groß gestaltet ist, dass durch die Lukenöffnung Bauteile aus dem gesamten Bereich eines Triebstrangs der Windenergieanlage nach oben entnommen oder von oben in die Gondel eingesetzt werden können. Ferner ist die Lukenöffnung wahlweise mit einem Lukendeckel verschließbar.

Die erfindungsgemäße Lösung geht im Hinblick auf das Montieren und Warten von Bauteilen einer Gondel einer Windenergieanlage völlig neuartige Wege. Es werden Bauteile nicht wie bei herkömmlichen Windenergieanlagen vom Boden aus in die Gondel mit einem Kran hinaufgezogen, sondern die Bauteile werden von oben in die Gondel eingefügt und aus dieser entnommen. Dies geschieht besonders bevorzugt von der Luft aus mittels eines Hubschraubers. Die erfindungsgemäße Verkleidung der Gondel einer Windenergieaniage ist insbesondere speziell dazu angepasst, damit sie mit einem Hubschrauber angeflogen werden kann und dann vom Hubschrauber aus Bauteile in die Verkleidung der Gondel hinein eingesetzt oder (im Falle von Wartungsarbeiten) auch von dort entnommen werden.

Dazu ist erfindungsgemäß an der Verkleidung einer Windenergieanlage an deren nach oben gewandten Verkleidungsdeckenfläche eine besonders große Lukenöffnung ausgebildet, die insbesondere im Wesentlichen so weit geöffnet werden kann, dass sie einen Großteil der Verkleidungsdeckenfläche überspannt. Mit herkömmlichen (kleinflächigen) Wartungsluken, wie sie derzeit teilweise auch an der nach oben gewandten Verkleidungsdeckenfläche von Windenergieanlagen ausgebildet sein können, ist ein derartiges Einsetzen von Bauteilen insbesondere mittels eines Hubschraubers nicht möglich.

Bei bekannten Luken an Verkleidungen von Gondeln einer Windenergieanlage sind die zugehörigen Lukendeckel in der Regel zum Aufklappen, also schwenkbar angeordnet. Erfindungsgemäß ist hingegen der Lukendeckel verschiebbar gelagert. Diese verschiebbare Lagerung ist insbesondere daher vorteilhaft, weil der erfindungsgemäße Lukendeckel besonders großflächig ist. Die verschiebbare Lagerung ist im Hinblick auf die Windangriffsfläche während des Öffnens des Lukendeckels besonders vorteilhaft. Auch ist der derartige verschiebbare Lukendeckel besser gehalten, während ein Hubschrauber die Gondel anfliegt.

Für ein auch unter rauen Wetterbedingungen sicheres Öffnen und Schließen des erfindungsgemäßen Lukendeckels ist es ferner von Vorteil, wenn dieser an der Außenseite der Verkleidungsdeckenfläche angeordnet und auf dieser verschiebbar ist. Der Lukendeckel übergreift dabei vorteilhaft den Rand der Lukenöffnung, sodass selbst bei Stürmen kein Regen oder Schnee in das Innere der Verkleidung eindringen kann.

Bei einer weiteren vorteilhaften Ausgestaltung der erfindungsgemäßen Lösung ist der Lukendeckel etwa halb so groß, wie die Verkleidungsdeckenfläche, überspannt also etwa die Hälfte der Verkleidungsdeckenfläche. Mit einem derartigen Lukendeckel ist ein optimaler Kompromiss zwischen einer möglichst großen, abdeckbaren Lukenöffnung und einer gleichzeitig sicheren Führung und Anordnung des Lukendeckels beim Öffnen geschaffen. Der geöffnete Lukendeckel ist an der verbleibenden Hälfte der Verkleidungsdeckenfläche sicher angeordnet und bietet dort nur eine kleine Windangriffsfläche.

Eine weitere besonders vorteilhafte Führung des erfindungsgemäß zu öffnenden Lukendeckels ist dadurch geschaffen, dass an zwei einander gegenüberliegenden Seitenrändern der Verkleidungsdeckenfläche je eine Schiene vorgesehen ist, an der jeweils der Lukendeckel verschiebbar gelagert ist.

Ferner ist vorteilhaft ein Teil der Verkleidungsdeckenfläche mit einer begehbaren Plattform überspannt, unter die der Lukendeckel zum Öffnen der Lukenöffnung bewegt werden kann. Die Plattform kann vorteilhaft insbesondere dann von Personen betreten werden, wenn durch die Lukenöffnung von einem Hubschrauber aus Bauteile eingesetzt oder aus der Gondel entnommen werden sollen. Zugleich ist der Lukendeckel zwischen der begehbaren Plattform und der Verkleidungsdeckenfläche im geöffneten Zustand sicher gehaltert.

Bei einer weiteren vorteilhaften Ausgestaltung der erfindungsgemäßen Lösung überdeckt die mit dem Lukendeckel verschließbare Lukenöffnung in der Verkleidungsdeckenfläche im Wesentlichen die gesamte Breite der zugehörigen Gondel. Auch ist es besonders vorteilhaft, wenn die mit dem Lukendeckel verschließbare Lukenöffnung in der Verkleidungsdeckenfläche im Wesentlichen bis an eine zu einem zugehörigen Rotor gewandte Vorderwandfläche der Verkleidung heranreicht. Die derart große Lukenöffnung an der nach oben gewandten Verkleidungsdeckenfläche ermöglicht es Bauteile aus dem gesamten Bereich eines Triebstrangs und auch über einem Drehkranz einer Gondel senkrecht nach oben zu entnehmen oder in diese einzusetzen.

Die erfindungsgemäße Lösung umfasst ferner eine Windenergieanlage mit einer derart gemäß der Erfindung gestalteten Verkleidung.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

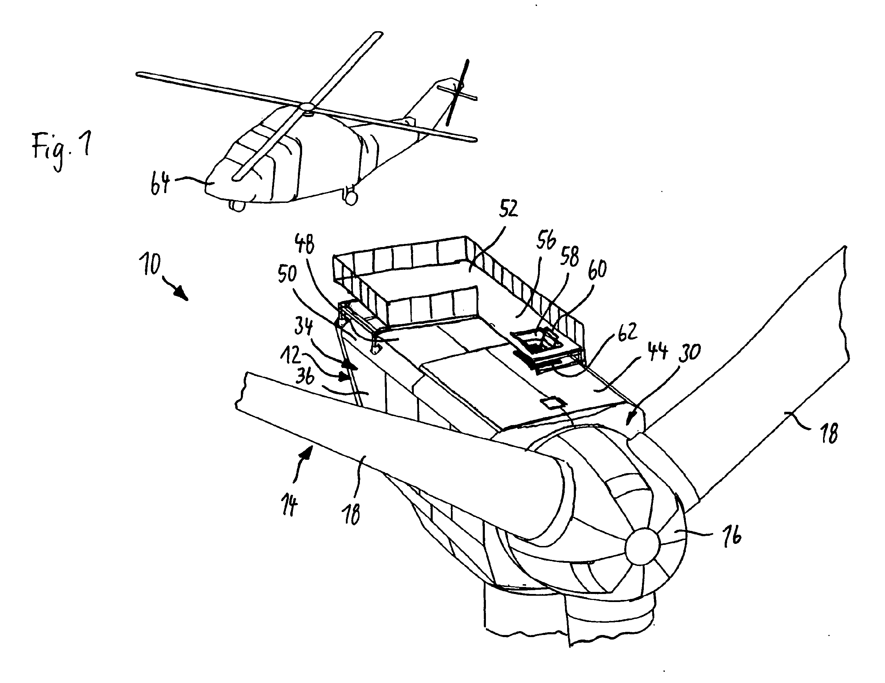

- Fig. 1: eine perspektivische Ansicht eines Ausführungsbeispiels einer erfindungsgemäßen Windenergieanlage,

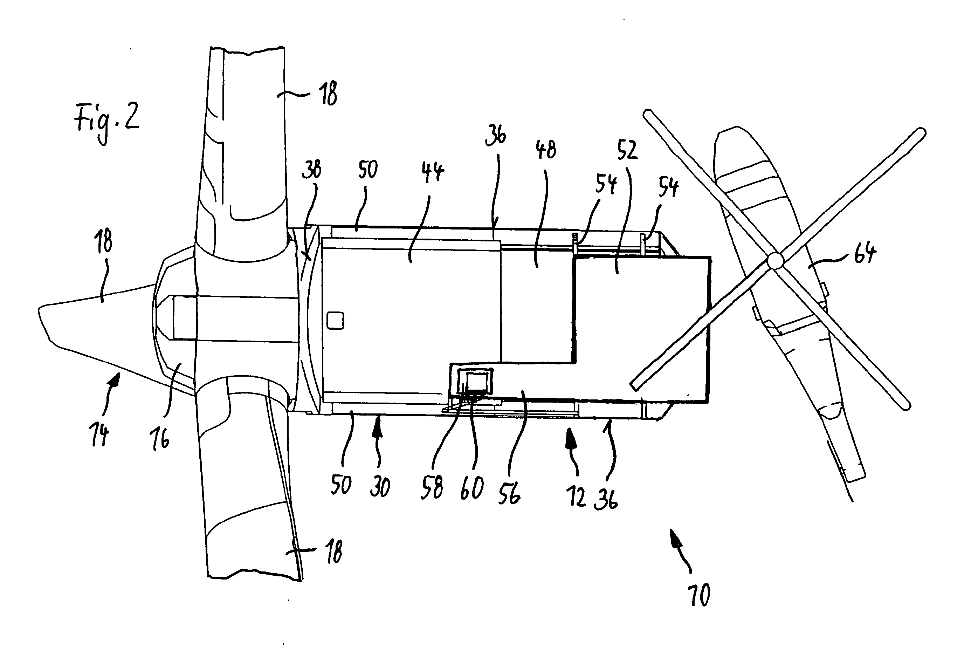

- Fig. 2: die Draufsicht der Windenergieanlage gemäß Fig. 1,
- Fig. 3: eine perspektivische Ansicht der Windenergieanlage gemäß Fig. 1 bei teilweise geöffneter Lukenöffnung,

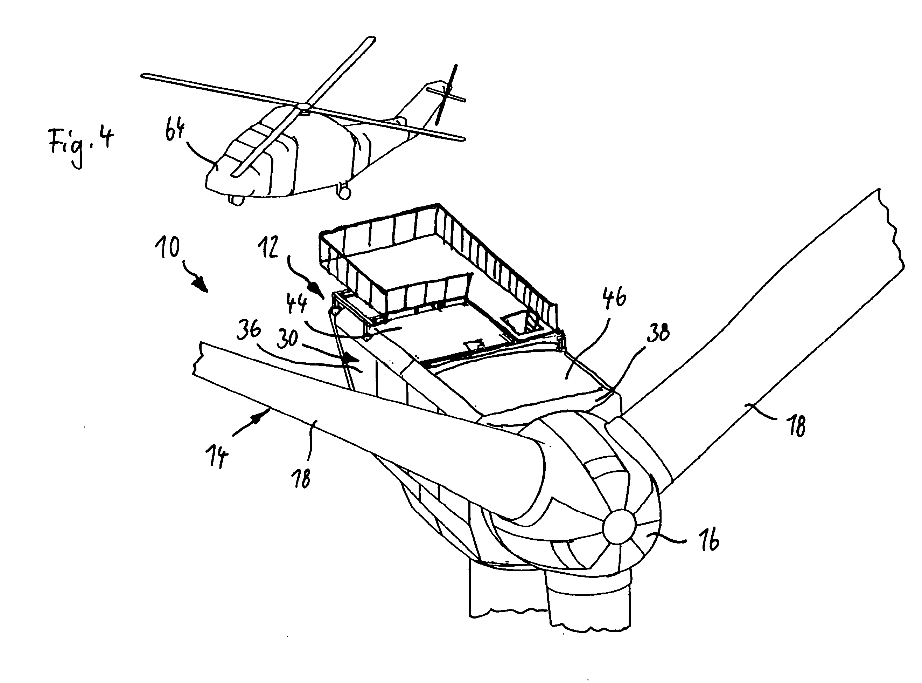

- Fig. 4: die Ansicht gemäß Fig. 1 bei vollständig geöffneter Lukenöffnung,
- Fig. 5: die Ansicht gemäß Fig. 2 bei vollständig geöffneter Lukenöffnung,

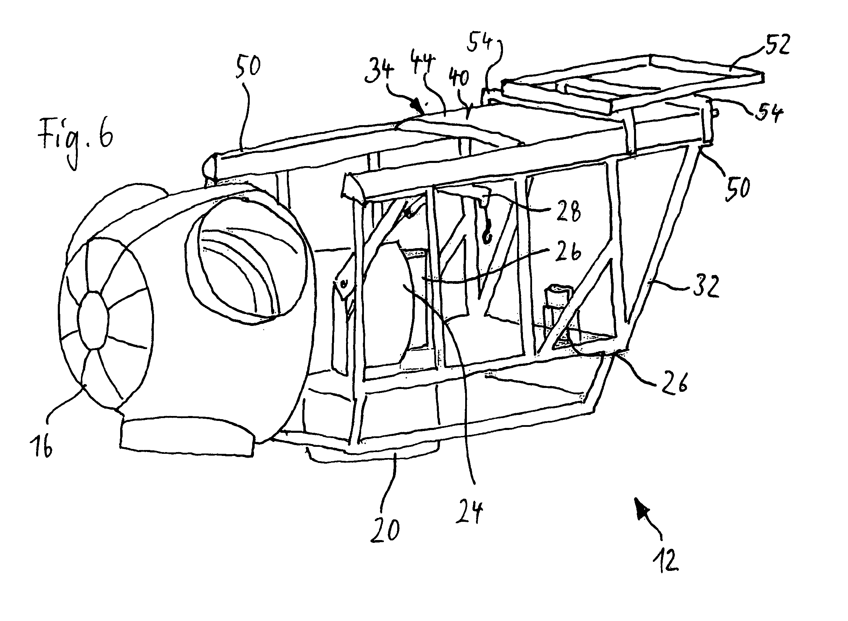

- Fig. 6: eine perspektivische Ansicht der Windenergieanlage gemäß Fig. 1 mit teilweise demontierten Bauelementen,

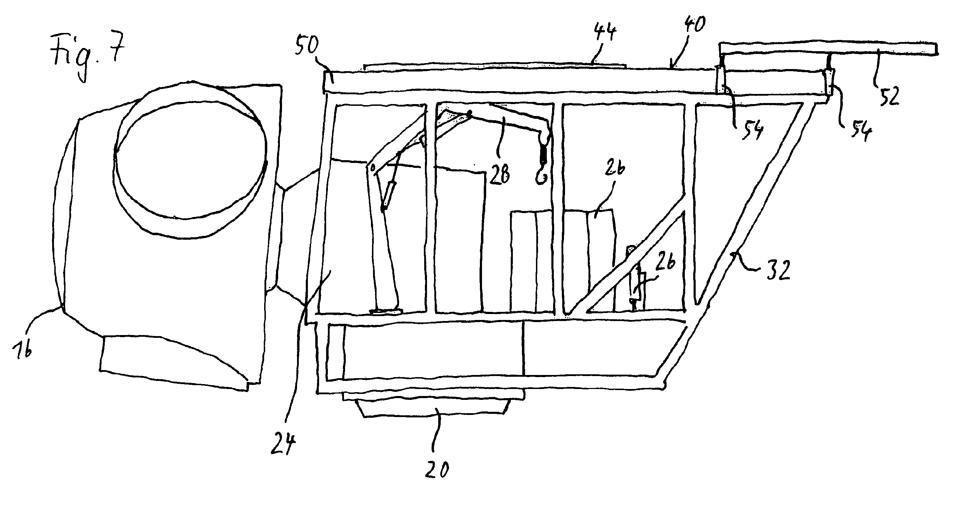

- Fig. 7: eine Seitenansicht gemäß der Darstellung von Fig. 6 und

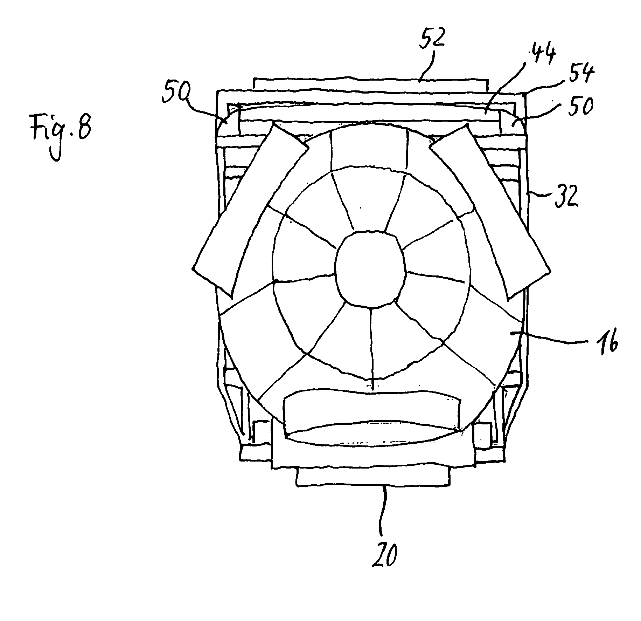

- Fig. 8: die Vorderansicht gemäß der Darstellung von Fig. 6.

### Detaillierte Beschreibung des Ausführungsbeispiels

In den Figuren ist eine Windenergieanlage 10 dargestellt, die als ein wesentliches Bauelement eine Gondel 12 umfasst. An der Gondel 12 ist ein Rotor 14 mittels einer Nabe 16 drehbar gelagert, wobei von der Nabe 16 drei Rotorblätter 18 radial abstehen.

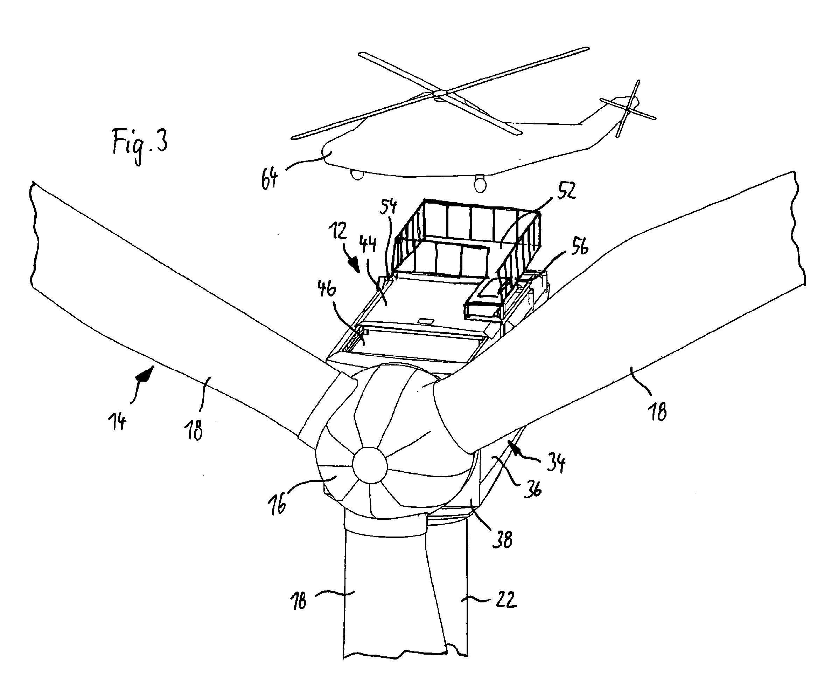

Die Gondel 12 ist mit Hilfe eines Drehkranzes 20 auf einem (nur in Fig. 3 dargestellten) Turm 22 angeordnet und umfasst im Inneren einen Triebstrang mit einem Generator 24 sowie zugehörige Steuereinrichtungen 26. Ferner ist in der Gondel 12 ein Kran 28 angebracht, mit dem insbesondere Bauteile des Triebstrangs eingesetzt und ausgetauscht werden können.

Die Außenhülle der Gondel 12 ist mit einer Verkleidung 30 gestaltet, die aus einem Rahmen 32 und daran angeordneten Paneelen 34 gebildet ist. Mit diesen Paneelen 34 sind insbesondere zwei Verkleidungsseitenflächen 36, eine Vorderwandfläche 38 und eine Verkleidungsdeckenfläche 40 gebildet.

An der Verkleidungsdeckenfläche 40 ist zwischen deren gegenüberliegenden Seitenrändern 42 ein Lukendeckel 44 ausgebildet, der im Wesentlichen die gesamte Breite der Verkleidungsdeckenfläche 40 überspannt und eine darunterliegende Lukenöffnung 46 abdeckt. Die Lukenöffnung 46 erstreckt sich im Wesentlichen über die gesamte Breite der Verkleidungsdeckenfläche 40 und in Längsrichtung von der Vorderwandfläche 38 bis zu einem Deckenpaneel 48, wobei die Lukenöffnung 46 im Wesentlichen die eine Hälfte der Längserstreckung ausmacht und sich das Deckenpaneel 48 über die zweite, hintere Hälfte der Verkleidungsdeckenfläche 40 erstreckt.

Der Lukendeckel 44 befindet sich dabei derart oberhalb des Deckenpaneels 48, dass er über dieses hinweggeschoben werden kann. Dabei ist der Lukendeckel 44 an zwei Schienen 50 geführt, die sich jeweils an den Seitenrändern 42 der Verkleidungsdeckenfläche 40 befinden. Auf diese Weise dichtet der Lukendeckel 44 die Lukenöffnung 46 auch bei besonders widrigen Witterungseinflüssen sicher ab und kann zugleich auf sehr einfache Weise in eine geöffnete Position verschoben werden, an der er dann eine besonders kleine Windangriffsfläche bietet.

Über dem Deckenpaneel 48 befindet sich eine Helikopter-Abseilfläche in Gestalt einer Plattform 52, die mit zwei Trägern 54 mit etwas Abstand über dem Deckenpaneel 48 angeordnet ist. Die beiden Träger 54 erstrecken sich dabei von einem Seitenrand 42 der Verkleidungsdeckenfläche 40 bis zum gegenüberliegenden Seitenrand 42. Die Träger 54 und die Plattform 52 sind derart ausgestaltet, dass der Lukendeckel 44 über das Deckenpaneel 48 hinweg unter die Plattform 52 verschoben werden kann. An der Plattform 52, die von Personen begehbar gestaltet ist, steht ein Steg 56 ab, der sich entlang einem der Seitenränder 42 in Richtung zu den Rotorblättern 18 und damit über die Lukenöffnung 46 hinweg erstreckt.
In dem Steg 46 ist eine Stegöffnung 58 ausgebildet, in der sich eine Leiter 60 befindet. Über die Leiter 60 kann eine Person von der Plattform 52 bzw. dem Steg 56 in das Innere der Gondel 12 und zurück gelangen. Die Person kann die Leiter 60 benutzen, wenn der Lukendeckel 44 von der Lukenöffnung 46 weggeschoben ist. Ferner kann die Person die Leiter 60 auch dann benutzen, wenn der Lukendeckel 44 die Lukenöffnung 46 verschließt. Dies ist dadurch möglich, dass in dem Lukendeckel 44 eine wahlweise verschließbare Öffnung 62 ausgebildet ist, die sich bei geschlossenem Lukendeckel 44 unter der Stegöffnung 58 befindet.

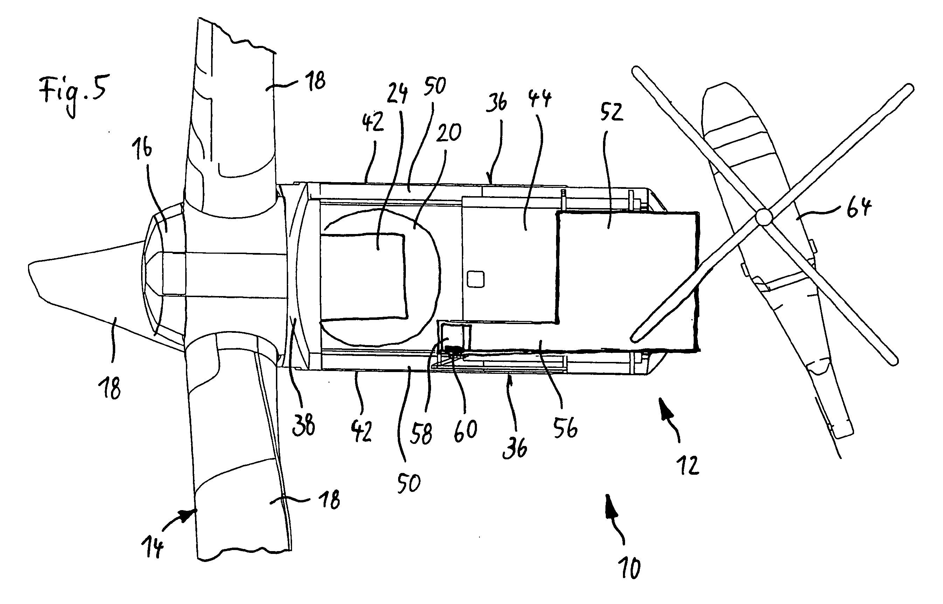

Bei geöffnetem Lukendeckel 44 ist die Lukenöffnung 46 derart groß gestaltet, dass Bauteile aus dem Inneren der Gondel 12 senkrecht nach oben, bevorzugt mittels eines Hubschraubers 64, entnommen und auch in die Gondel 12 eingesetzt werden können. Vorteilhaft ist die Lukenöffnung 46 dazu derart groß, dass sie sich über die gesamte Grundfläche des Triebstrangs erstreckt (siehe Fig. 5).

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Windenergieanlage
- 12: Gondel
- 14: Rotor
- 16: Nabe
- 18: Rotorblatt
- 20: Drehkranz
- 22: Turm
- 24: Generator bzw. Triebstrang
- 26: Steuereinrichtung
- 28: Kran
- 30: Verkleidung
- 32: Rahmen
- 34: Paneel
- 36: Verkleidungsseitenfläche
- 38: Vorderwandfläche
- 40: Verkleidungsdeckenfläche
- 42: Seitenrand
- 44: Lukendeckel
- 46: Lukenöffnung
- 48: Deckenpaneel
- 50: Schiene
- 52: Plattform
- 54: Träger
- 56: Steg
- 58: Stegöffnung
- 60: Leiter
- 62: Öffnung im Lukendeckel
- 64: Hubschrauber

## Patentansprüche

1. Verkleidung (30) einer Gondel (12) einer eine Plattform (52) umfassenden Windenergieanlage (10), mit einer in Einbaulage nach oben gewandten Verkleidungsdeckenfläche (40), einer in der Verkleidungsdeckenfläche (40) ausgebildeten Lukenöffnung (46), die derart groß ausgebildet ist, dass durch die Lukenöffnung (46) Bauteile aus dem gesamten Bereich eines Triebstrangs (24) der Windenergieanlage (10) nach oben entnommen oder von oben in die Gondel (12) eingesetzt werden können, und einem Lukendeckel (44), mit dem die Lukenöffnung (46) wahlweise verschließbar ist,
**dadurch gekennzeichnet, dass** der Lukendeckel (44) unter die Plattform (52) verschiebbar gelagert ist.

2. Verkleidung nach Anspruch 1,
bei der die Plattform (52) über einem Deckenpaneel (48) angeordnet ist und der Lukendeckel (44) über das Deckenpaneel (48) hinweg unter die Plattform (52) verschiebbar ist.

3. Verkleidung nach Anspruch 1 oder 2,
bei der der Lukendeckel (44) an der Außenseite der Verkleidungsdeckenfläche (40) angeordnet und auf dieser verschiebbar ist.

4. Verkleidung nach einem der Ansprüche 1 bis 3,
bei der der Lukendeckel (44) etwa die Hälfte der Verkleidungsdeckenfläche (40) überspannt.

5. Verkleidung nach einem der Ansprüche 1 bis 4,
bei der an zwei einander gegenüberliegenden Seitenrändern (42) der Verkleidungsdeckenfläche (40) je eine Schiene (50) vorgesehen ist, an der jeweils der Lukendeckel (44) verschiebbar gelagert ist.

6. Verkleidung nach einem der Ansprüche 1 bis 5,
bei der ein Teil der Verkleidungsdeckenfläche (40) mit einer begehbaren Plattform (52) überspannt ist, unter die der Lukendeckel (44) zum Öffnen der Lukenöffnung (46) bewegt werden kann.

7. Verkleidung nach einem der Ansprüche 1 bis 6,
bei der die mit dem Lukendeckel (44) verschließbare Lukenöffnung (46) in der Verkleidungsdeckenfläche (40) im Wesentlichen die gesamte Breite der zugehörigen Gondel (12) überdeckt.

8. Verkleidung nach einem der Ansprüche 1 bis 7,
bei der die mit dem Lukendeckel (44) verschließbare Lukenöffnung (46) in der Verkleidungsdeckenfläche (40) im Wesentlichen bis an eine zu einem zugehörigen Rotor (14) gewandte Vorderwandfläche (38) der Verkleidung (30) heranreicht.

9. Verkleidung nach einem der Ansprüche 1 bis 8,
bei der ein Steg (56) sich über die Lukenöffnung (46) hinweg erstreckt, in dem eine Stegöffnung (58) ausgebildet ist.

10. Verkleidung nach Anspruch 9,
bei der in dem Lukendeckel (44) eine wahlweise verschließbare Öffnung (62) ausgebildet ist, die sich bei geschlossenem Lukendeckel (44) unter der Stegöffnung (58) befindet.

11. Windenergieanlage (10) mit einer Verkleidung (30) nach einem der Ansprüche 1 bis 10.

12. Gondel (12) mit einer Verkleidung (30) nach einem der Ansprüche 1 bis 10.

## Claims

1. Panelling (30) of a nacelle (12) of a wind energy installation (10) comprising a platform (52), having a panelling ceiling surface (40) facing upwards in installation position, a hatch opening (46) formed in the panelling ceiling surface (40), which opening is formed to be of such a size that components from the entire area of a drive train (24) of the wind energy installation (10) can be removed upwards or inserted from above into the nacelle (12) through the hatch opening (46), and a hatch cover (44), by means of which the hatch opening (46) is selectively closable,
**characterised in that** the hatch cover (44) is mounted to be slidable under the platform (52).

2. Panelling according to claim 1,
wherein the platform (52) is arranged above a ceiling panel (48) and the hatch cover (44) is slidable over the ceiling panel (48) under the platform (52).

3. Panelling according to claim 1 or 2,
wherein the hatch cover (44) is arranged and slidable on the outside of the panelling ceiling surface (40).

4. Panelling according to one of claims 1 to 3,
wherein the hatch cover (44) spans about half of the panelling ceiling surface (40).

5. Panelling according to one of claims 1 to 4,
wherein, on two mutually opposite lateral margins (42) of the panelling ceiling surface (40), respectively one rail (50) is provided, on which respectively the hatch opening (44) is slidably mounted.

6. Panelling according to one of claims 1 to 5,
wherein a part of the panelling ceiling surface (40) is spanned with an accessible platform (52), under which the hatch cover (44) can be moved for opening the hatch opening (46).

7. Panelling according to one of claims 1 to 6,
wherein the hatch opening (46) in the panelling ceiling surface (40), which opening is closable by means of the hatch cover (44), substantially extends over the entire width of the associated nacelle (12).

8. Panelling according to one of claims 1 to 7,
wherein the hatch opening (46) in the panelling ceiling surface (40), which opening is closable by means of the hatch cover (44), substantially reaches as far as a front wall surface (38) of the panelling (30), which front wall surface faces an associated rotor (14).

9. Panelling according to one of claims 1 to 8,
wherein a bridge (56) extends over the hatch opening (46), in which bridge a bridge opening (58) is formed.

10. Panelling according to claim 9,
wherein in the hatch cover (44) a selectively closable opening (62) is formed, which opening is situated under the bridge opening (58) when the hatch cover (44) is closed.

11. Wind energy installation (10) having a panelling (30) according to one of claims 1 to 10.

12. Nacelle (12) having a panelling (30) according to one of claims 1 to 10.

## Revendications

1. Habillage (30) d'une nacelle (12) d'une éolienne (10) comprenant une plateforme (52), avec une surface de couverture d'habillage (40) orientée vers le haut en position de montage, avec une ouverture de hublot (46) réalisée dans la surface de couverture d'habillage (40) dont la taille est telle qu'en passant à travers l'ouverture de hublot (46), des composants peuvent être retirés vers le haut hors de la région d'une chaîne d'impulsions (24) de l'éolienne (10) ou peuvent être insérés par en haut dans la nacelle (12) et avec un cache-hublot (44) à l'aide duquel l'ouverture de hublot (46) peut être fermée au choix, **caractérisé en ce que** le cache-hublot (44) est disposé de façon à pouvoir coulisser sous la plateforme (52).

2. Habillage selon la revendication 1, dans lequel la plateforme (52) est disposée au-dessus d'un lambris de plafond (48) et dans lequel le cache-hublot (44) peut être coulissé sous la plateforme (52) par-dessus le lambris de plafond (48).

3. Habillage selon la revendication 1 ou 2, dans lequel le cache-hublot (44) est disposé au niveau du côté extérieur de la surface de couverture d'habillage (40) et peut être coulissé sur elle.

4. Habillage selon l'une quelconque des revendications 1 à 3, dans lequel le cache-hublot (44) recouvre approximativement la moitié de la surface de couverture d'habillage (40).

5. Habillage selon l'une quelconque des revendications 1 à 4, dans lequel un rail (50) est respectivement prévu au niveau des deux bordures latérales (42) opposées l'une par rapport à l'autre de la surface de couverture d'habillage (40), le cache-hublot (44) étant respectivement disposé de façon coulissante au niveau dudit rail.

6. Habillage selon l'une quelconque des revendications 1 à 5, dans lequel une partie de la surface de couverture d'habillage (40) est recouverte avec une plateforme (52) accessible sous laquelle le cache-hublot (44) peut être déplacé pour ouvrir l'ouverture de hublot (46).

7. Habillage selon l'une quelconque des revendications 1 à 6, dans lequel l'ouverture de hublot (46) pouvant être fermée à l'aide du cache-hublot (44) recouvre dans la surface de couverture d'habillage (40) pour l'essentiel la totalité de la largeur de la nacelle (12) associée.

8. Habillage selon l'une quelconque des revendications 1 à 7, dans lequel l'ouverture de hublot (46) pouvant être fermée à l'aide du cache-hublot (44) atteint, dans la surface de couverture d'habillage (40), pour l'essentiel une surface de paroi avant (38), orientée vers un rotor (14) associé, de l'habillage (30).

9. Habillage selon l'une quelconque des revendications 1 à 8, dans lequel une passerelle (56) s'étend au-dessus de l'ouverture de hublot (46) dans laquelle une ouverture de passerelle (58) est réalisée.

10. Habillage selon la revendication 9, dans lequel une ouverture (62) pouvant au choix être fermée est réalisée dans le cache-hublot (44), ladite ouverture se trouvant sous l'ouverture de passerelle (58) lorsque le cache-hublot (44) est fermé.

11. Éolienne (10) équipée d'un habillage (30) selon l'une quelconque des revendications 1 à 10.

12. Nacelle (12) équipée d'un habillage (30) selon l'une quelconque des revendications 1 à 10.
